# EUROPEAN PATENT APPLICATION

(11) **EP 3 848 683 A1**
(43) Date of publication of application: **14.07.2021**
(21) Application number: 20198161.0
(22) Date of filing: 24.09.2020
(51) Int. Cl.: G01L 3/10, B62D 6/10, B62D 15/02, G01D 5/245, G01L 5/22

(54) **MULTI-TURN ABSOLUTE TORQUE ANGLE SENSOR MODULE**

(30) Priority: 09.01.2020 KR 20200003402
(71) Applicant: SKF Sealing Solutions Korea Co., Ltd., Dalseong-gun, Daegu 42981 (KR)
(72) Inventor: HUR, Yongsoo, Daegu, 42170 (KR); HAN, Chunsoo, Daegu, 42657 (KR); PARK, Sungsang, Daegu, 42686 (KR); Jung, Jimin, Dalseong-gun, Daegu, 42964 (KR)
(74) Representative: Dehns

(57) **Abstract**

A multi-turn absolute torque angle sensor module according to the present invention includes a main gear magnet (10) which includes a first magnet part in which a master track and a nonius track which are formed of straps, in which magnets having different polarities are alternately disposed, are vertically disposed on a circumferential surface portion of the first magnet part and the polarity distributions of the master track and the nonius track are disposed to be shifted from each other by a difference of one or more polarities, wherein a main gear is disposed at an upper side in the main gear magnet and connected to one side of a torque shaft, a pinion gear magnet (20) connected to the main gear and including a second magnet part including a pinion gear of which the number of gears is less than the number of gears of the main gear and a magnet installed on the pinion gear, a circuit substrate (30) disposed under the main gear magnet and the pinion gear magnet, first and second sensor parts disposed on the circuit substrate to detect magnetic forces of the first and second magnet parts, respectively, and a case which is vertically coupled and has an accommodation space accommodating the main gear magnet, the pinion gear magnet, and the circuit substrate and through which the torque shaft passes.

## Description

This application claims priority to and the benefit of Korean Patent Application No. KR10-2020-0003402, filed on January 9, 2020.

### BACKGROUND

### 1. Field of the Invention

The present invention relates to a multi-turn absolute torque angle sensor module allowing an absolute angular position to be precisely detected according to multi-turning when detecting a turning angle and detecting torque using a torsion amount of a torque shaft while minimizing interference of a magnetic field of an angle sensor when detecting the torque.

### 2. Discussion of Related Art

Generally, auxiliary steering systems are used as apparatuses which aid steering stability of vehicles using an independent power supply. Conventionally, hydraulic drive systems are used as the auxiliary steering systems, but recently, electronic power steering systems (EPSs) of which power loss is low and accuracy is high are used as the auxiliary steering systems.

In the EPS, an electronic control unit drives a motor on the basis of driving conditions and operation information of a driver detected by the vehicle speed sensor, a torque sensor, an angle sensor, and the like to secure turning stability and rapidly provide a restoring force so that the driver can safely drive the vehicle.

The vehicle speed sensor detects a speed of the running vehicle, the torque sensor detects the torque applied to a torque shaft to output an electrical signal proportional to the detected torque, and the angle sensor outputs an electrical signal proportional to a turning angle of the steering shaft.

Recently, a torque angle sensor (TAS) in which a torque sensor and an angle sensor, which detect driver's steering wheel operation information, are formed as one sensor is proposed and the use thereof is increasing.

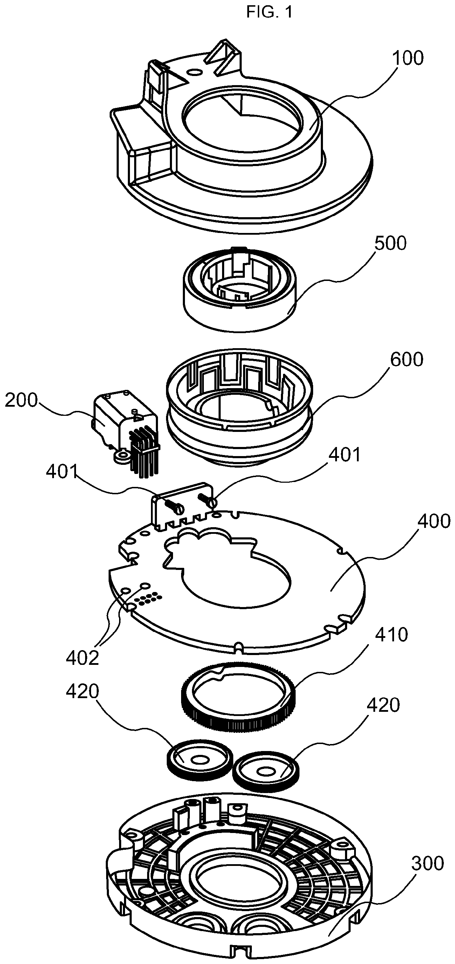

FIG. 1 is an exploded perspective view illustrating such a conventional torque angle sensor.

The torque angle sensor includes an upper case 100, a rotor 500, a stator 600, a printed circuit board (PCB) 400, a main gear 410, sub-gears 420, and a lower case 300 which are sequentially disposed from the top thereof.

The rotor 500 and the stator 600 performing a sensing function as a torque sensor are disposed above the PCB 400, and gears 410 and 420 serving as an angle sensor are disposed under the PCB 400.

In the case of the torque sensor, a magnet is disposed along an outer circumferential surface of the rotor 500 connected to one side of a torque shaft, and the stator 600, which includes protrusion pieces corresponding to polarities of the magnet on an outer circumferential surface thereof, is connected to the other side of the torque shaft to detect a magnetic amount due to a difference in mutual turning amount so as to detect a torque of the torque shaft and transmit the torque to an electronic control unit.

In the case of the angle sensor, as a driver turns a steering wheel, the main gear 410 coupled to a drive shaft is turned in conjunction with the steering wheel so that a difference in turning angle is generated, and in this case, Hall integrated circuits (ICs) 401 and 402 detect a change in magnetic field of the magnet attached to the sub-gear 420 coupled to the main gear 410 to determine an electrical signal and transmit the electrical signal to the electric control unit.

However, in the conventional technology, since a backlash (a gap between a pair of gears) is generated according to an engagement structure between the main gear and the sub-gears of the angle sensor, there is a problem in that it is difficult to accurately measure a steering angle.

In addition, in the conventional torque sensor unit, a rotor in which a magnet is disposed on an outer circumferential surface thereof and a stator on which a torque sensor is disposed are provided at both sides of a torque shaft, and an angle sensor unit includes a magnet attached to a sub-gear and a Hall IC. That is, in the conventional technology, since the torque sensor unit and the angle sensor unit are separately provided, the number of components is large, and thus there are problems in that a manufacturing cost and a volume thereof are increased.

### [Related Art]

### [Patent Document]

(Patent Document 0001) KR 10-1681778 B, Dec 01, 2016, FIG. 3
(Patent Document 0002) KR 10-1427218 B, Aug 13, 2014, FIG. 1
(Patent Document 0003) KR 10-1468323 B, Dec 2, 2014, FIG. 1
(Patent Document 0004) KR 10-1772205 B, Aug 28, 2017, FIG. 1

### SUMMARY OF THE INVENTION

The present invention is directed to providing a torque angle sensor module which allows an angle and a torque to be precisely measured by preventing interference of a magnetic field of anther sensor, and of which a size is reduced and a weight is lowered.

According to an aspect of the present invention, there is provided a multi-turn absolute torque angle sensor module including a main gear magnet which includes a first magnet part in which a master track and a nonius track which are formed of straps, in which magnets having different polarities are alternately disposed, are vertically disposed on a circumferential surface portion of the first magnet part and the polarity distributions of the master track and the nonius track are disposed to be shifted from each other by a difference of one or more polarities, wherein a main gear is disposed on an upper side in the main gear magnet and connected to one side of a torque shaft, a pinion gear magnet connected to the main gear and including a second magnet part including a pinion gear of which the number of gears is less than the number of gears of the main gear and a magnet installed on the pinion gear, a circuit substrate disposed under the main gear magnet and the pinion gear magnet, first and second sensor parts disposed on the circuit substrate to detect magnetic forces of the first and second magnet parts, respectively, and a case which is vertically coupled and has an accommodation space accommodating the main gear magnet, the pinion gear magnet, and the circuit substrate and through which the torque shaft passes.

A stator installed at a side opposite to one side, at which the main gear magnet is installed, of the torque shaft and installed under the circuit substrate, a coil circuit printed on an upper or lower surface of the circuit substrate to detect a turning angle of the stator, and a third sensor part configured to measure an electromagnetic force excited in the coil circuit may be installed in the case.

A lower surface, which faces the circuit substrate, of the second magnet part may be divided into halves and each of an N pole and an S pole may be disposed on one of the halves.

A gear ratio of the main gear to the pinion gear may be 1:N (in this case, N>1 and multiples of N do not include a prime number).

### BRIEF DESCRIPTION OF THE DRAWINGS

The above and other objects, features and advantages of the present invention will become more apparent to those of ordinary skill in the art by describing exemplary embodiments thereof in detail with reference to the accompanying drawings, in which:
FIG. 1 is an exploded perspective view illustrating a structure of a conventional torque angle sensor module;
FIG. 2 is an exploded perspective view illustrating a torque angle sensor module according to one embodiment of the present invention;
FIG. 3 is a view for describing a method of detecting an absolute position according to multi-turning; and
FIG. 4 is a perspective view illustrating a pinion gear magnet according to one embodiment of the present invention.

### DETAILED DESCRIPTION OF EXEMPLARY EMBODIMENTS

Hereinafter, the present invention will be described in detail according to embodiments with reference to the accompanying drawings.

The present invention will be described using an example of a torque angle sensor module installed on a steering shaft of a vehicle and configured to measure a turning angle and a torque of the steering shaft.

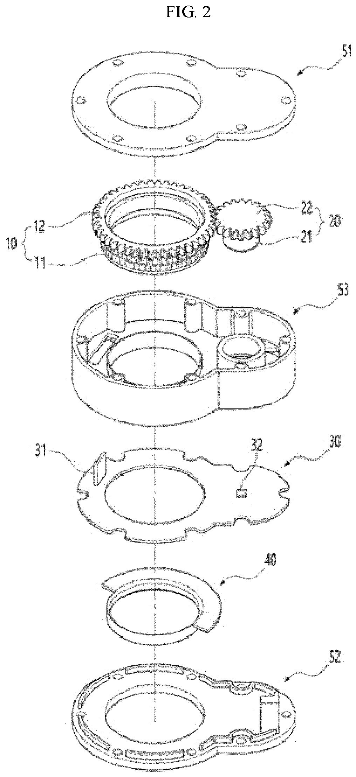

First, detecting a turning angle will be described with reference to FIG. 2 which is an exploded perspective view illustrating a multi-turn absolute torque angle sensor module according to the present embodiment.

In order to detect the turning angle, a main gear magnet, a pinion gear magnet, first and second sensor parts configured to magnetic forces of first and second magnet parts installed on the magnets, and an arithmetic and logical part are used.

A main gear magnet 10 includes a first magnet part 11 and a main gear 12. A master track and a nonius track which include straps, in which magnets having different polarities are alternately disposed, are vertically disposed on a circumferential surface portion of the first magnet part 11. The polarity distributions of the master track and the nonius track are disposed to be shifted from each other by one polarity difference. The main gear 12 is disposed at an upper side in the main gear magnet 10. The first magnet part 11 and/or the main gear 12 is coupled to a steering shaft which is not illustrated, and the first magnet part 11 and the main gear 12 coupled to each other are turned at the same angle according to turning of the steering shaft.

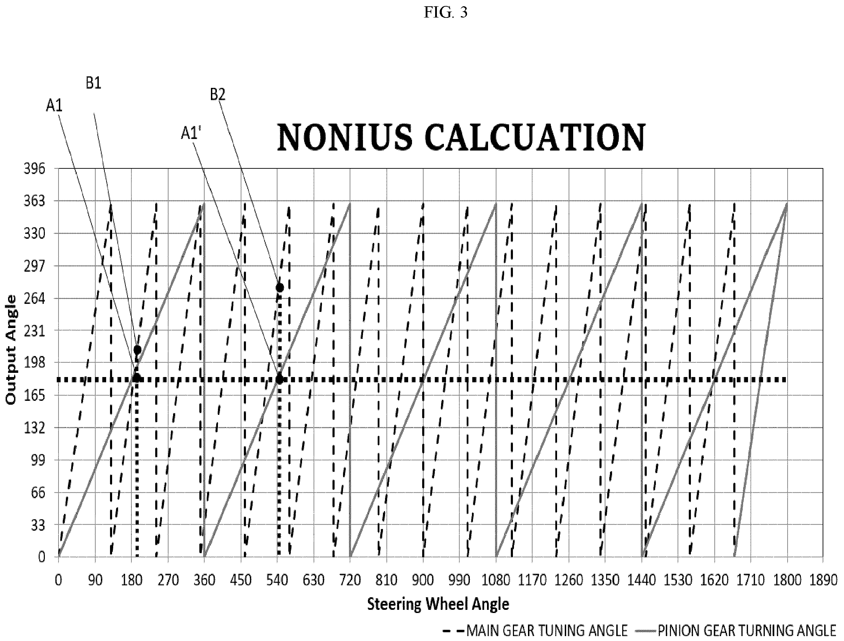

Changes in magnetic force of the master track and the nonius track are measured by a first sensor part 31 installed on a circuit substrate 30, and a value measured by the first sensor part 31 may be converted as a turning angle by the arithmetic and logical part (not shown). For example, a turning angle of a turning shaft may be determined using a value measured by the first magnet part 11 according to a large triangular waveform of FIG. 3. A Y-axis of a left side in FIG. 3 shows a signal value determined according to the first magnet part and output by the arithmetic and logical part. An X- axis of an upper end in FIG. 3 shows the number of turns and a turning angle of the steering shaft.

The first magnet part may measure a turning angle and a turning direction of the steering shaft through a nonius calculation of sensing signals generated from the master track and the nonius track, but, in a case in which power of the vehicle is supplied after being blocked, an actual position of the steering wheel may not be detected when only the first magnet part is used. This is because, when the steering wheel turns 180° (A1) and 540° (A1') like a blue triangular waveform illustrated in FIG. 3, the signal values A1 and A1' determined by the first sensor part and the arithmetic and logical part are equal.

According to the present embodiment, a pinion gear magnet 20 connected to the main gear magnet 10 is provided to measure an absolute turning angle even when the steering shaft turns one time or more.

The pinion gear magnet 20 includes a pinion gear 22 connected to the main gear 12. According to the present embodiment, a gear ratio of the main gear 12 to the pinion gear 22 is set to 1:3.2. That is, when the main gear 12 turns one time, the pinion gear 22 turns 3.2 times.

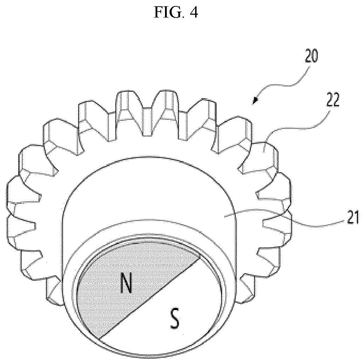

A second magnet part 21 is disposed under the pinion gear 22 as illustrated in FIG. 4 such that a lower surface, which faces the circuit substrate, of the second magnet part 21 is divided into halves and each of an N pole and an S pole is disposed on one of the halves.

The second magnet part may also be formed on a circumferential surface thereof.

Measuring of a magnetic force of the second magnet part 21 is performed by a second sensor part 32 installed on the circuit substrate 30 and a value of the magnetic force is calculated by the arithmetic and logical part.

A turning angle of the pinion gear may be obtained using a yellow triangular waveform of FIG. 3.

The signal value of the first magnet part when the steering shaft turns 180° is A1 equal to A1' which is the signal value of the first magnet part when the steering shaft turns 540°, but, in this case, signal values of the second magnet part are B1 and B2 which are different from each other.

Accordingly, even though the arithmetic and logical part recognizes that the signal value of the first magnet part is A1 (A1'), the arithmetic and logical part may recognize that the steering shaft turns 180° in the case in which the signal value of the second magnet part is B1 and turns 540° in the case in which the signal value of the second magnet part is B2 due to a difference between the signal values of B1 and B2.

As described above, since the turning angle is directly detected using only the signal value generated from the first magnet part and the number of turns of the steering wheel according to multi-turning is detected using the signal values of the second magnet part without using the gear ratio, an absolute turning angle of the steering shaft can be precisely detected without an error due to a gear backlash or gear wear when the steering shaft is used for a long time.

To this end, the gear ratio of the main gear to the pinion gear may be 1:N, wherein N is greater than 1 and prime numbers are not included among the multiples of N. For example, in a case in which the gear ratio is 1:2.2, since the multiples of N, which is 2.2, include 11 which is a prime number, N is not divided while a nonius calculation is internally performed and a lower digit than a predetermined decimal point thereof is rounded off, an accumulated error may occur, and thus it is preferable that the prime number not be included in the multiples.

Although it is described that the steering shaft turns in only one direction with reference to FIG. 3, since the first magnet part and the first sensor part may detect a turning direction even in a case in which the steering shaft turns in an opposite direction thereof, an absolute angular position can be definitely determined according to the above-described description.

Next, torque measurement will be described.

A part of the steering shaft of the steering wheel is machined or functioned as a torque shaft (not shown), and the main gear magnet is connected to one side of the torque shaft, and the stator is connected to the other side thereof.

According to the present embodiment, in a case in which a difference in turning angle is generated between one side and the other side of the torque shaft, a torque amount is calculated on the basis of the difference in angle.

A structure for measuring a turning angle of the other side of the torque shaft will be described below.

The stator 40 is installed at one side and the other side of the torque shaft (not shown) on which the main gear magnet 10 is installed, and the stator 40 is positioned under the circuit substrate 30. In addition, a coil circuit (not shown) on which a magnetic force is induced due to turning of the stator 40 is formed on an upper surface or lower surface of the circuit substrate 30. The stator may be formed of a conductive material such as Al and Cu.

Accordingly, a turning angle of the stator may be determined according to a third sensor part (not shown) configured to detect the magnetic force induced in the coil circuit due to the turn of the stator and the arithmetic and logical part. An angle difference Δd is generated due to torsion of the torque shaft, which occurs due to the turning angle of the stator and a turning angle of a main gear assembly, and a torque applied to the steering shaft may be obtained using a look-up table according to an extent of the angle difference.

The main gear magnet, the pinion gear magnet, the circuit substrate, the stator, the coil circuit, various sensors, and the arithmetic and logical part are accommodated in a case.

In addition, the arithmetic and logical part and the sensors may also be formed as one integrated circuit (IC).

The case according to the present embodiment is divided into an upper cover 51, a lower cover 52, and a main body portion 53, the main gear magnet 10 and the pinion gear magnet 20 are disposed at an upper side in the main body portion 53, the circuit substrate 30 and the stator 40 are disposed at a lower side thereof, and the upper and lower sides thereof are closed by the upper cover 51 and the lower cover 52.

Since the torque angle sensor module is installed on the steering shaft, a through-hole passing through the case is provided, and all components which are coupled to the steering shaft or interfere with the steering shaft in positions include through-holes.

In the description, although an arithmetic and logical method of the arithmetic and logical part and specific kinds of the sensors are not described, the present invention will be easily implemented by those skilled in the art according to the above-described description.

In addition, it is described that the arithmetic and logical part according to the present embodiment is included in the torque angle sensor module, but since a function of the arithmetic and logical part may be performed by an electronic control unit (ECU) in a vehicle, the arithmetic and logical part may be omitted in the torque angle sensor module.

In addition, the torque angle sensor module may include a connector, a controller area network (CAN) communication transceiver, and the like for transmitting a measured turning angle and a torque value.

According to the present invention, since an absolute angular position according to multi-turning can be measured, an absolute angular position can be detected when a torque angle sensor module is restarted after being stopped, the absolute angular position can be highly-precisely detected by removing an error due to a gear backlash, and a torque can also be precisely measured because there is no interference of a magnetic field, and since a torque sensor includes a coil circuit and a stator printed on a circuit substrate, there are effects in that a structure thereof is simple, and a size and a weight of the torque angle sensor module are reduced.

## Claims

1. A multi-turn absolute torque angle sensor module comprising:
a main gear magnet (10) which includes a first magnet part (11) in which a master track and a nonius track which are formed of straps, in which magnets having different polarities are alternately disposed, are vertically disposed on a circumferential surface portion of the first magnet part and the polarity distributions of the master track and the nonius track are disposed to be shifted from each other by a difference of one or more polarities, wherein a main gear is disposed at an upper side in the main gear magnet and connected to one side of a torque shaft;
a pinion gear magnet (20) connected to the main gear and including a second magnet part including a pinion gear of which the number of gears is less than the number of gears of the main gear and a magnet installed on the pinion gear;
a circuit substrate (30) disposed under the main gear magnet and the pinion gear magnet;
first and second sensor parts (31, 32) disposed on the circuit substrate to detect magnetic forces of the first and second magnet parts, respectively; and
a case (300) which is vertically coupled and has an accommodation space accommodating the main gear magnet, the pinion gear magnet, and the circuit substrate and through which the torque shaft passes.

2. The multi-turn absolute torque angle sensor module of claim 1, wherein a stator (40), a coil circuit, and a third sensor part are installed in the case,
wherein the stator installed at a side opposite to one side, at which the main gear magnet is installed, of the torque shaft and installed under the circuit substrate,
the coil circuit printed on an upper or lower surface of the circuit substrate to detect a turning angle of the stator, and
the third sensor part configured to measure an electromagnetic force excited in the coil circuit.

3. The multi-turn absolute torque angle sensor module of claim 1 or 2, wherein a lower surface, which faces the circuit substrate, of the second magnet part is divided into halves and each of an N pole and an S pole is disposed on one of the halves.

4. The multi-turn absolute torque angle sensor module of any preceding claim, wherein a gear ratio of the main gear to the pinion gear is 1 :N.

5. The multi-turn absolute torque angle sensor module of claim 4 wherein N>1 and multiples of N do not include a prime number.
